# EUROPÄISCHE PATENTSCHRIFT

(11) **EP 0 727 857 B1**
(45) Veröffentlichungstag und Bekanntmachung des Hinweises auf die Patenterteilung: **04.11.1998**
(21) Anmeldenummer: 96100802.6
(22) Anmeldetag: 20.01.1996
(51) Int. Cl.: H02H 5/08

(54) **Lagerüberwachung für Elektromotor**
Monitoring the bearing of an electric motor
Surveillance d'un palier d'un moteur électrique

(30) Priorität: 18.02.1995 DE 19505541
(43) Veröffentlichungstag der Anmeldung: 21.08.1996
(73) Patentinhaber: WILO GmbH, D-44263 Dortmund (DE)
(72) Erfinder: Arnswald, Kurt Werner, D-51427 Bergisch-Gladbach/Refrath (DE)
(74) Vertreter: COHAUSZ HANNIG DAWIDOWICZ & PARTNER

(56) Entgegenhaltungen:
- EP-A- 0 417 719
- DE-A- 2 801 358
- DE-A- 3 313 418

## Beschreibung

Die Erfindung betrifft einen Elektromotor mit mindestens einem in einem Überwachungsstromkreis angeordneten Thermoschalter und/oder Thermosensor und mit einer im Motor angeordneten Einrichtung, die durch ein Lager eindringendes Wasser anzeigt.

Es sind Vorrichtungen zum Erkennen von eindringendem Wasser in Motorgehäuse von Pumpen bekannt. Diese Überwachungsvorrichtungen sind für explosionsgeschützte und nicht explosionsgeschützte Elektromotoren unterschiedlich ausgebildet.

So befindet sich bei nicht explosionsgeschützten Motoren eine Elektrode in der Ölkammer, die zwischen dem Motorgehäuse und der Kreiselkammer der Pumpe angeordnet ist. In die Ölkammer eindringendes Wasser schließt einen Überwachungsstromkreis. Der Überwachungsstromkreis führt dabei von der Elektrode durch die Ölkammer über das Gehäuse der Ölkammer und über das Motorgehäuse sowie über den Schutzleiter zum Anschlußkabel.

Bei explosionsgeschützten Motoren darf die Ölkammer nicht durchbrochen werden. Auch dürfen Elektroden wegen Explosionsgefahr durch Funkenbildung nicht in der Ölkammer angeordnet sein. Aus diesem Grund ist es lediglich möglich, eine Elektrode im Innenraum des Motorgehäuses anzuordnen.

Außerdem dürfen bei explosionsgeschützten Motoren nicht der Schutzleiter und das Motorgehäuse als Stromleiter benutzt werden. Daher ist ein zusätzlicher Leitungsdraht zur Rückführung des Überwachungsstromkreises erforderlich, der durch in den Innenraum des Motorgehäuses eindringendes Wasser geschlossen wird.

Ein weiterer wesentlicher Nachteil bei explosionsgeschützten Motoren besteht darin, daß in die Ölkammer eingedrungenes Wasser nicht erkannt wird, sondern erst dann der Überwachungsstromkreis das Wasser erkennt, wenn es auch in den Innenraum des Motorgehäuses eingedrungen ist.

Aus der DE-OS 33 13 418 ist eine Anordnung zum Überwachen der Läufertemperatur elektrischer Maschinen bekannt. Beim Erreichen einer bestimmten Temperatur ändern sich die Lastverhältnisse in einem Sekundärstromkreis durch temperaturabhängige Schalter. Aufgabe der Anordnung ist es, beim Auftreten einer kritischen oder unzulässig hohen Temperatur einen weiteren Temperaturanstieg zu verhindern. In das Maschinengehäuse eingedrungenes Wasser kann jedoch nicht erkannt werden.

Auch die DE-AS 11 74 426 zeigt eine Anordnung zur Temperaturüberwachung von beweglichen Maschinenteilen, insbesondere von Rotorwicklungen elektrischer Maschinen. Dazu sind in einer Meßbrückschaltung Temperaturfühler und Transformator-Primärwicklungen zusammengeschaltet. Aufgabe der Anordnung ist es, eine Temperaturmessung beweglicher Maschinenteile mittels Temperaturfühlern durchzuführen, die eine hohe Meßgeschwindigkeit, eine hohe Meßleistung und einen möglichst großen Energieunterschied zwischen Meßgröße und Störwerten ergibt. Auch hierbei ist eine Feststellung von in das Maschinengehäuse eingedrungenen Flüssigkeiten nicht möglich.

Die CH-626 756 beschreibt einen Detektor, mit dem in ein Motorgehäuse eingedrungene Flüssigkeit feststellbar ist. Dazu können in einem Steuerstromkreis Kontaktelektroden vorgesehen sein, die eine Anzeige oder eine Abschaltung des Motors auslösen können. Aufgabe des Detektors ist es, das Eindringen einer Flüssigkeit in das Gehäuse mit Sicherheit festzustellen, um dann eine Anzeige oder eine Abschaltung auslösen zu können. Eine Überwachung der Temperatur im Motorenstator ist jedoch nicht möglich.

In den vorgenannten Druckschriften ist jeweils eine Anordnung zur Ausführung einer der Funktionen Temperaturüberwachung oder Feststellung von in das Motorgehäuse eingedrungener Flüssigkeit beschrieben. Es ist jedoch auch aus der Zusammenschau aller drei Druckschriften kein Hinweis darauf gegeben, diese beiden Funktionen in einer Maschine mit nur einem einzigen Stromkreis auszuführen.

Aufgabe der Erfindung ist es, eine konstruktiv einfache Überwachungsvorrichtung der eingangs genannten Art zu schaffen, die bei gleicher Bauweise für explosionsgeschützte und nicht explosionsgeschützte Elektromotoren eine schnelle und zuverlässige Erkennung von eingedrungenem Wasser ermöglicht und hierbei mit einer geringen Anzahl elektrischer Leitungen auskommt.

Diese Aufgabe wird erfindungsgemäß dadurch gelöst, daß im Überwachungsstromkreis ein Übertrager, insbesondere ein Transformator, bestehend aus einer Primär- und einer Sekundärwicklung angeordnet ist, wobei die Primärwicklung an den Überwachungsstromkreis angeschlossen ist und die Sekundärwicklung mit einem Sekundärstromkreis elektrisch in Verbindung ist, wobei in dem Sekundärstromkreis ein Sensor oder eine Elektrode angeordnet ist, der bzw. die bei eindringendem Wasser die Größe der Impedanz des Sekundärstromkreises verändert und sich hierdurch der Strom im Überwachungsstromkreis verändert, insbesondere erhöht, wobei diese Stromstärkeänderung ein Warnsignal erzeugt oder den Motor abschaltet.

Bei einfacher Konstruktion und Montage wird in die Ölkammer eingedrungenes Wasser schnell und sicher erkannt. Auch ist bei explosionsgeschützten Motoren kein getrennter zweiter Stromkreis mit einer geringeren Spannung erforderlich, da die niedrigere Spannung im Sekundärstromkreis eine ausreichende Sicherheit gegen einen Funkenüberschlag gibt. Hierdurch können zusätzliche Zuleitungen für einen zweiten Stromkreis eingespart werden, wodurch die Überwachungsvorrichtung kostengünstiger herstellbar ist.

Die Lagerüberwachung für einen Elektromotor ist also derart ausgebildet, daß sowohl die Überwachung der Temperatur im Motorenstator als auch das Erkennen von eindringendem Wasser in das Motorengehäuse mit nur einem einzigen Stromkreis möglich ist.

Auch wird nicht, wie bei bisher bekannten Überwachungsvorrichtungen von explosionsgeschützten Motoren, ein zusätzlicher Leitungsdraht zum Leiten des Stromes des Überwachungsstromkreises verwendet, sodaß wirtschaftlich günstigere Standardkabel mit 7 oder 10 Adern benutzt werden können und nicht wesentlich teurere 8- bzw. 11-adrige Kabel benötigt werden.

Ein weiterer Vorteil der erfindungsgemäßen Überwachungsvorrichtung besteht darin, daß der Personenschutz durch die niedrigere Spannung im Sekundärstromkreis vergrößert wird. Die zu fördernde Flüssigkeit steht bei Kontakt mit den Elektroden ebenfalls unter dieser niedrigeren Spannung und bedeutet daher zu keinem Zeitpunkt eine Gefahrenquelle für Personen, insbesondere für das Bedienungspersonal.

Die gleiche Bauart bei explosionsgeschützten und nicht explosionsgeschützten Motoren erleichtert darüber hinaus die Planung, Fertigung und Lagerung, da weniger unterschiedliche Teile benötigt werden.

Weitere vorteilhafte Ausführungen sind aus den Unteransprüchen und aus der Beispielsbeschreibung zu ersehen.

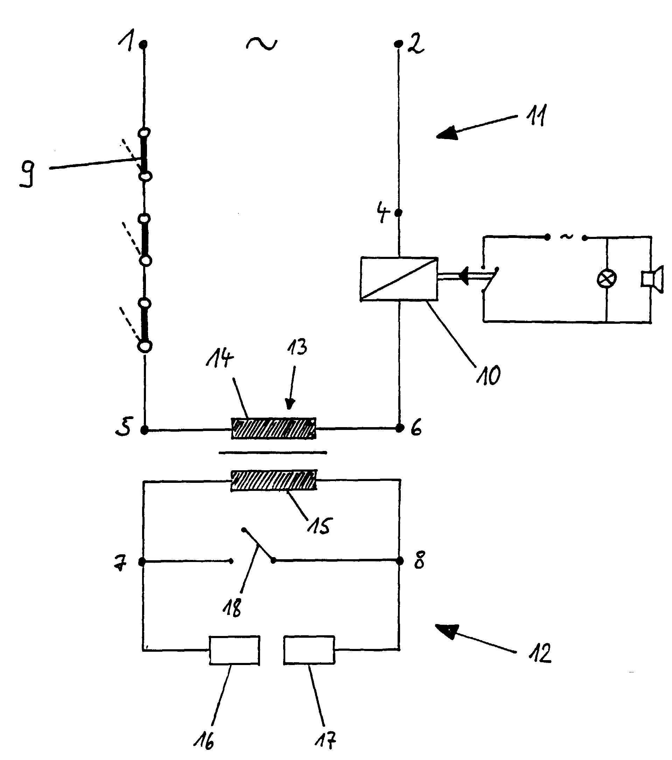

Ein mögliches Ausführungsbeispiel der Erfindung ist in der Zeichnung dargestellt und wird im folgenden näher erläutert.

Die Zeichnung zeigt den Schaltungsplan einer Überwachungsvorrichtung für Elektromotoren. Zwischen den Anschlußklemmen 1 und 2 des Überwachungsstromkreises 11 liegt eine Wechselspannung von 220 Volt an. Die Anschlußklemme 1 ist über mehrere in Reihe geschaltete Thermoschalter 9 mit dem Anschluß 5 der Primärwicklung 14 eines Transformators 13 elektrisch verbunden. Der zweite Anschluß 6 der Primärwicklung 14 des Transformators 13 ist über ein stromempfindliches Relais 10 mit der zweiten Anschlußklemme 2 elektrisch verbunden. Die Thermoschalter 9 sind so angeordnet, daß sie sich in Nähe der Wicklungen des Elektromotors befinden. Bei Überschreiten einer bestimmten Grenztemperatur öffnen die Thermoschalter 9, so daß die Stromzufuhr zum Motor unterbrochen ist und ein weiteres Erhitzen des Motors verhindert wird.

Die Anschlüsse 7 und 8 der Sekundärwicklung 15 des Transformators 13 sind mit jeweils einer Elektrode 16 bzw. 17 elektrisch verbunden. Die Elektroden 16 und 17 befinden sich an der Stelle, wo eindringendes Wasser erfaßt werden soll, insbesondere in der Ölkammer, die zwischen dem Motorgehäuse und der Kreiselkammer der Pumpe angeordnet ist.

Sobald eingedrungenes Wasser den Sekundärstromkreis 12 zwischen den beiden Elektroden 16 und 17 schließt, ändert sich die Impedanz des Sekundärstromkreises 12, wodurch sich über den Transformator 13 die Stromstärke im Überwachungsstromkreis 11 erhöht. Durch diese Stromstärkeerhöhung im Überwachungsstromkreis 11 schaltet das stromempfindliche Relais 10 beispielsweise ein Warnsignal ein und/oder die Stromzufuhr zum Motor wird unterbrochen.

Parallel zu den beiden Elektroden 16 und 17 ist ein Thermoschalter 18 zwischen den Anschlüssen 7 und 8 der Sekundärwicklung 15 des Transformators 13 geschaltet. Der Thermoschalter 18 schließt bei Erreichen einer bestimmten Grenztemperatur den Sekundärstromkreis 12, zum Beispiel aufgrund von starker Lagererwärmung, wodurch sich die Impedanz des Sekundärstromkreises 12 ändert. Durch die Kopplung über den Transformator 13 erhöht sich wiederum die Stromstärke im Überwachungsstromkreis 11, wodurch das stromempfindliche Relais ein Warnsignal einschaltet und/oder die Stromzufuhr zum Motor unterbricht.

Die Spannung im Sekundärstromkreis 12 ist in dem durch die Windungsanzahlen x und y der Primärwicklung 14 bzw. Sekundärwicklung 15 des Transformators 13 vorgegebenen Verhältnis geringer als die Spannung zwischen den Anschlußklemmen 1 und 2 des Überwachungsstromkreises 11. Dadurch treten bei Schließen des Sekundärstromkreises 12 wesentlich geringere Überschlagsspannungen auf und der Explosionsschutz ist hierdurch zusätzlich vergrößert.

## Patentansprüche

1. Elektromotor mit mindestens einem in einem Überwachungsstromkreis angeordneten Thermoschalter (9) und/oder Thermosensor und mit einer im Motor angeordneten Einrichtung, die durch ein Lager eindringendes Wasser anzeigt,
**dadurch gekennzeichnet,**
- daß der Thermoschalter (9) und/oder Thermosensor Bestandteil einer Vorrichtung zur Überwachung der Temperatur im Motorenstator ist,
- daß im Überwachungsstromkreis (11) ein Übertrager in Form eines Transformators (13), bestehend aus einer Primär- (14) und einer Sekundärwicklung (15) angeordnet ist,
- daß die Primärwicklung (14) an den Überwachungs stromkreis (11) angeschlossen ist und die Sekundärwicklung (15) mit einer Sekundärstromkreis (12) elektrisch in Verbindung ist,
- daß in dem Sekundärstromkreis (12) ein Sensor cder zwei Elektroden (16, 17) angeordnet sind, der bzw. die bei eindringendem Wasser die Größe der Impedanz des Sekundärstromkreises (12) verändern und sich hierdurch die Stromstärke im Überwachungsstromkreis (11) verändert, insbesondere erhöht,
- und daß durch diese Stromstärkeänderung ein Warnsignal erzeugbar oder der Motor abschaltbar ist.

2. Vorrichtung nach Anspruch 1, **dadurch gekennzeichnet,** daß in dem Überwachungsstromkreis (11) ein stromempfindliches Relais (10) angeordnet ist, das bei einer Stromstärkeänderung im Überwachungsstromkreis (11) ein Warnsignal einschaltet oder den Motor abschaltet.

3. Vorrichtung nach Anspruch 1 oder 2, **dadurch gekennzeichnet,** daß in dem Sekundärstromkreis (12) ein Thermoschalter (18) angeordnet ist, der bei einer bestimmten Grenztemperatur die Größe der Impedanz des Sekundärstromkreises (12) verändert und sich hierdurch die Stromstärke im Überwachungsstromkreis (11) verändert, insbesondere erhöht, und durch diese Stromstärkeänderung ein Warnsignal erzeugbar oder der Motor abschaltbar ist.

4. Vorrichtung nach Anspruch 3, **dadurch gekennzeichnet,** daß ein Anschluß der Sekundärwicklung des Transformators mit einem Anschluß des Sensors oder der Elektrode (7) und der andere Anschluß der Sekundärwicklung des Transformators mit dem anderen Anschluß des Sensors oder der zweiten Elektrode (8) elektrisch verbunden ist.

5. Vorrichtung nach Anspruch 4, **dadurch gekennzeichnet,** daß der Thermoschalter (18) in dem Sekundärstromkreis (12) parallel zu dem Sensor oder den Elektroden (16, 17) geschaltet ist und bei Erreichen der Grenztemperatur schließt.

6. Vorrichtung nach einem der vorherigen Ansprüche, **dadurch gekennzeichnet,** daß die im Überwachungsstromkreis (11) angeordneten Thermoschalter (9) und/oder Thermosensoren bei einer bestimmten Grenztemperatur öffnen und der Stromfluß im Überwachungsstromkreis (11) hierdurch unterbrochen wird.

7. Vorrichtung nach einem der vorherigen Ansprüche **dadurch gekennzeichnet,** daß die Primärwicklung (14) des Transformators (13) ein Anzahl von x Windungen hat und die Sekundärwicklung (15 eine Anzahl von y Windungen hat und x größer als y ist.

## Claims

1. An electric motor having at least one thermal-lag switch (9) and/or sensor and a device disposed in the motor which indicates water penetrating through a bearing,
characterised in that
the thermal-lag switch (9) and/or sensor forms a component of a system for monitoring the temperature in the motor stator,
disposed in the monitoring circuit (11) is a transmitter in the form of a transformer (13) comprising a primary winding (14) and a secondary winding (15),
the primary winding (14) is connected to the monitoring circuit (11) and the secondary winding (15) is electrically connected to a secondary circuit (12),
disposed in the secondary circuit (12) is a sensor or two electrodes (16, 17) which when water penetrates change the value of the impedance of the secondary circuit (12), thereby changing, more particularly increasing the current intensity of the monitoring circuit (11),
the change in current intensity can generate a warning signal or switch off the motor.

2. A system according to claim 1, characterised in that disposed in the monitoring circuit (11) is a current-sensitive relay (10) which switches on a warning signal or switches off the motor when the current intensity in the monitoring circuit (11) changes.

3. A system according to claims 1 or 2, characterised in that disposed in the secondary circuit (12) is a thermal-lag switch (18) which when a predetermined limit temperature is reached changes the value of the impedance of the secondary circuit (12), thereby changing, more particularly increasing the current intensity in the monitoring circuit (11), the change in current intensity generating a warning signal or switching off the motor.

4. A system according to claim 3, characterised in that a connection of the secondary winding of the transformer is connected to a connection of the sensor or the electrode (7), the other connection of the secondary winding of the transformer being electrically connected to the other connection of the sensor or the second electrode (8).

5. A system according to claim 4, characterised in that the thermal-lag switch (18) is incorporated in the secondary circuit (12) in parallel with the sensor or the electrodes (16, 17) and closes when the limit temperature is reached.

6. A system according to one of the preceding claims, characterised in that the thermal-lag switch (9) and/or the thermal sensors disposed in the monitoring circuit (11) open at a predetermined limit temperature, thereby interrupting the flow of current in the monitoring circuit (11).

7. A system according to one of the preceding claims, characterised in that the primary winding (14) of the transformer (13) has a number of windings x and the secondary winding (15) has a number of windings y, x being greater than y.

## Revendications

1. Moteur électrique avec au moins un thermo-rupteur (9) et/ou un thermo-détecteur disposés dans un circuit électrique de surveillance et avec un dispositif, disposé dans le moteur, détectant l'eau pénétrant dans un palier,
caractérisé en ce
- que le thermo-rupteur (9) et/ou le thermo-détecteur font partie d'un dispositif de surveillance de la température dans le stator du moteur,
- qu'un dispositif de transmission, sous forme d'un transformateur (13) constitué d'un bobinage primaire (14) et d'un bobinage secondaire (15), est disposé dans le circuit électrique de surveillance (11),
- que le bobinage primaire (14) est connecté au circuit électrique de surveillance (11) et le bobinage secondaire (15) est en liaison électrique avec un circuit électrique secondaire (12),
- que, dans le circuit électrique secondaire (12), sont disposés un détecteur ou deux électrodes (16, 17) qui, en cas de pénétration d'eau, modifie ou respectivement modifient l'impédance du circuit électrique secondaire (12) et que, de ce fait, l'intensité du courant dans le circuit électrique de surveillance (11) est modifiée, en particulier augmentée,
- et que, par cette augmentation de l'intensité du courant, un signal d'alarme peut être engendré ou le moteur peut être mis hors circuit.

2. Dispositif selon la revendication 1,
caractérisé en ce que, dans le circuit électrique de surveillance (11), est disposé un relais (10) sensible à l'intensité qui, dans le cas d'une modification de l'intensité du courant dans le circuit électrique de surveillance (11), met un signal d'alarme en circuit ou met le moteur hors circuit.

3. Dispositif selon la revendication 1 ou 2,
caractérisé en ce que, dans le circuit électrique secondaire (12), est disposé un thermo-rupteur (18) qui, pour une température limite déterminée, modifie la grandeur de l'impédance dans le circuit électrique secondaire (12) et que, de ce fait, l'intensité du courant dans le circuit électrique de surveillance (11) se modifie, en particulier augmente, et que, par cette modification de l'intensité du courant, un signal d'alarme peut être engendré ou le moteur peut être pris hors circuit.

4. Dispositif selon la revendication 3,
caractérisé en ce qu'une borne du bobinage secondaire du transformateur est connectée électriquement à une borne du détecteur ou de l'électrode (7) et l'autre borne du bobinage secondaire du transformateur à l'autre borne du détecteur ou de la seconde électrode (8).

5. Dispositif selon la revendication 4,
caractérisé en ce que le thermo-rupteur (18) est connecté, dans le circuit électrique secondaire (12), en parallèle au détecteur ou aux électrodes (16, 17) et, en cas d'arrivée à la température limite, se ferme.

6. Dispositif selon l'une des revendications précédentes,
caractérisé en ce que le thermo-rupteur (9) et/ou les thermo-détecteurs disposés dans le circuit électrique de surveillance (11) s'ouvrent pour une température limite déterminée et que la conduction de courant dans le circuit électrique de surveillance (11) est de ce fait interrompue.

7. Dispositif selon l'une des revendications précédentes,
caractérisé en ce que le bobinage primaire (14) du transformateur (13) a un nombre x de spires et le bobinage secondaire (15) un nombre y de spires et que x est supérieur à y.
